# EUROPEAN PATENT APPLICATION

(11) **EP 2 815 973 A1**
(43) Date of publication of application: **24.12.2014**
(21) Application number: 14173331.1
(22) Date of filing: 20.06.2014
(51) Int. Cl.: B64D 11/00

(54) **Virtual star illumination in a cabin of an aircraft**

(30) Priority: 21.06.2013 US 201361837702 P
(71) Applicant: Zodiac Aerotechnics, 78373 Plaisir Cedex (FR)
(72) Inventor: Boomgaarden,, Günter, 23684 Scharbeutz (DE); Meckes, Rüdiger, 23919 Berkenthin (DE); Rittner, Wolfgang, 23623 Ahrensbök (DE); Glück, Michael, 23617 Stockelsdorf (DE)
(74) Representative: Eisenführ Speiser

(57) **Abstract**

The invention relates to a display device for an aircraft cabin, comprising a display adapted to display a plurality of stars. A further aspect of the invention is an aircraft cabin comprising such a display device and an aircraft cabin wall compartment comprising a plurality of wall sections and a plurality of light emitting means for individually illuminating each wall section, wherein said wall sections and said light emitting means form such a display device. According to the invention, said said display is adapted to display a plurality of stars.

## Description

The invention relates to a display device for an aircraft cabin, comprising a display adapted to display a plurality of stars. A further aspect of the invention is an aircraft cabin comprising such a display device and an aircraft cabin wall compartment comprising a plurality of wall sections and a plurality of light emitting means for individually illuminating each wall section, wherein said wall sections and said light emitting means form such a display device.

Generally, aircraft cabin design follows functional requirements and safety aspects. Beside these important aspects, means and devices for establishing a convenient atmosphere to the passengers and for passenger entertainment are to be considered in cabin interior design. To this regard, it is known to provide entertainment devices to the passenger wherein the passenger may consume audio or video material. Further, flight information like the travel path, the geographical position, the altitude, speed, outside temperature can be displayed to the passenger.

Generally, there is a need for additional options for passenger entertainment meeting the individual preferences of a passenger. Further, a need exists for providing a convenient and a pleasant atmosphere on board of an aircraft to prevent emotions like fear, anxiety or the like which might be present by individual passengers during a flight.

According to the invention, a display device for installation inside of an aircraft cabin is provided wherein said display is adapted to display a plurality of stars. According to the invention, passengers inside an aircraft cabin can be entertained by the star pattern on said display. A display shall be understood to comprise either a screen on to which an image of said stars is projected via a forward or a reverse projection from before or behind the screen, respectively. In this case, the projection of the star pattern onto the screen may be provided by a projector device like a laser beam which is deflected by mirrors or other optical, beam deflecting means which can be controlled in such a way to project a plurality of stars onto the screen by using a single laser beam which is split up, deflected and/or driven in a pulsed mode to produce a star pattern. Alternatively, a beamer may be used to project such a star image onto a screen. As an alternative to a display composed out of a screen and a projecting device, a self illuminating display like an LED display or any other type of self-emitting displays may be used to display said plurality of stars.

According to the invention, stars shall be displayed for entertainment and information of the passenger. Beside such stars, other space objects may be displayed, e.g. other types of planets, satellites or the like.

According to a first preferred embodiment of the invention the display forms a portion of a ceiling of an aircraft cabin. Preferably, the display may be a part of a passenger service unit, wherein such a passenger service unit is to be understood as a unit comprising further means for providing service or entertainment to the passenger like a reading light, and air nozzle, an emergency oxygen mask container and/or a user interface allowing the passenger to control functions of the reading light, the air nozzle or to call a cabin attendant. In particular, such display forming a portion of a ceiling of the aircraft cabin will establish a virtual image of the sky comprising the stars above the aircraft and will thus provide a convenient atmosphere on board of the aircraft.

Still further, it is preferred that the display is connected to a star database, the star database having stored data representing three-dimensional positions of the stars, and wherein the display is adapted to display the plurality of stars depending on the data received from the star database. By this embodiment the display is connected to an electronic device comprising a star data base, wherein data representing the positions of a plurality of stars are stored. By this, the pattern of stars can be reproduced and thus star configurations can be displayed.

Still further, it is preferred that the display is connected to a GPS system, the GPS system being adapted to provide the position of the aircraft, and wherein the display is adapted to display the plurality of stars depending on GPS data received from the GPS system. According to this embodiment, the geographical position of the aircraft is detected by a GPS system and said geographical position is used to calculate the pattern of stars which is displayed via said display. This allows to present a star pattern on said display which corresponds to the position of the aircraft and thus gives an impression of a virtual real time star pattern which moves above the passenger according to the movement of the aircraft.

To this regard it is further preferred that the display is connected to a geographical positioning system and to a data base containing data related to the position of a plurality of stars in space. This allows to control the display in such a way, e.g. by a separate control unit coupled to said GPS system and said data base, to display on said display a realtime star pattern which exactly corresponds to the star pattern which would be seen by a passenger from the actual position of the aircraft when looking into the sky from said position. By this, a realistic image of the star pattern as seen from the position of the aircraft can be displayed and can be changed according to the change of the geographical position of the aircraft when flying along its travel path. In particular in view of the aircraft travelling at high speed and further considering the influence of the rotation of the earth this will produce an interesting and entertaining image on the display to the passenger.

According to a further preferred embodiment the display device is adapted to display a plurality of stars corresponding to the constellation of stars in the environment of the aircraft.

According to a further preferred embodiment, the display comprises or consists of a projection system and/or a laser system adapted to project light reflections, representing the plurality of stars, onto the ceiling of the aircraft cabin. Such a projection system may comprise a single source of light or a plurality of sources of light to project a star pattern onto a screen, wherein said screen can be represented by the ceiling of the aircraft cabin. The projector might provide a front-up projection wherein the projector is on the same side of the ceiling like the passenger watching the star pattern which is projected. Alternatively, the projector might be arranged to provide a reverse projection wherein the ceiling is arranged between the projector and the passenger and is configured as a semi transparent screen.

Still further it is preferred that the display device is adapted to combine the display of the plurality of stars with lighting effects, preferably mood lighting or scenery simulations. According to this embodiment, the real time star pattern on the display is combined with additional colours, information or the like to establish a certain mood or atmosphere inside the cabin or to provide additional information to the passenger or to simply provide light to the passenger.

A further aspect of the invention is an aircraft cabin wall compartment comprising a plurality of wall sections and a plurality of light emitting means for individually illuminating each wall section, further comprising a control unit for a controlling the light emitting means. Such aircraft cabin wall compartment may be used to cover a side wall or a ceiling of the aircraft cabin and to provide individual illumination of said wall compartment by composing said wall compartment out of a plurality of wall sections and light emitting means associated with said wall sections.

It is preferred to further improve said aircraft cabin wall compartment in that said light emitting means are coupled to a star database comprising data related to the position of stars in space and coupled to said control unit wherein said control unit is adapted to provide control data to said light emitting means, said control data being calculated by said control unit from said data related to the position of stars to illuminate said wall section with an image comprising a plurality of stars. According to this preferred embodiment the air craft cabin wall compartment is equipped to display a star pattern to the passenger wherein said star pattern is provided as a real star pattern on the basis of data stored in said star data base.

It is further preferred that said control unit is coupled to a global positioning system (GPS) providing a real time geographical position information of the aircraft, and wherein said control unit is adapted to calculate a real-time star pattern from said real time geographical position information and said data related to the position of stars. According to this embodiment the aircraft cabin wall compartment may display a real-time star pattern as explained beforehand for the display unit coupled to a GPS system and a star database.

According to a further preferred embodiment said real-time star pattern on said wall section is a virtual star pattern corresponding to the star pattern as virtually seen by a passenger sitting on a seat of an aircraft and looking towards the wall section in the real time geographical position of the aircraft, i.e. the wall section. By this, the passenger may enjoy a star pattern on said display which corresponds to those stars which he would be able to see if he could look outside the aircraft behind said display and thus a virtual real time star pattern is presented to the passenger giving a teaching and information about the star pattern which is looked at in said present geographical position of the aircraft. It is to be understood that such virtual star pattern can at best be provided to each passenger by providing multiple displays to adapt such star pattern shown on a display to the direction of view of each passenger or a number of passengers in order to best meet the actual real star pattern outside the aircraft in the direction of view of the individual passenger.

To this regard, it is further preferred that each wall section is associated to a row of seats or a single seat. By this, a wall section can be used to display a star pattern which corresponds to the real star pattern outside the aircraft as seen from said row of seats or said single seat.

Still further, it is preferred that each wall section has a length corresponding to at least the length of a passenger seat or the distance between two adjacent rows of an aircraft. By this, a field of view of a passenger sitting on a seat is nearly fully covered by said display and thus a realistic impression can be presented to the passenger.

According to a further preferred embodiment said control unit is coupled to a cabin attendant call switch and adapted to activate a light emitting means associated with a passenger seat or a row of passenger seats which is associated with said cabin attendant call switch. By this, an additional function is incorporated into the aircraft cabin wall compartment and by this the identification of a passenger which has activated the cabin attendant call is simplified for the crew of the aircraft to quickly follow the attendant call.

It is further preferred that said wall section is a sidewall section or a ceiling section.

According to a final preferred embodiment said light emitting means is adapted to emit light of at least two different colors and said control unit is adapted to switch between said colors depending on a condition of a cabin attendant call switch. This preferred embodiment presents a simplified and easily identifiable method to quickly find a passenger which has activated the cabin attendant call switch inside an aircraft cabin.

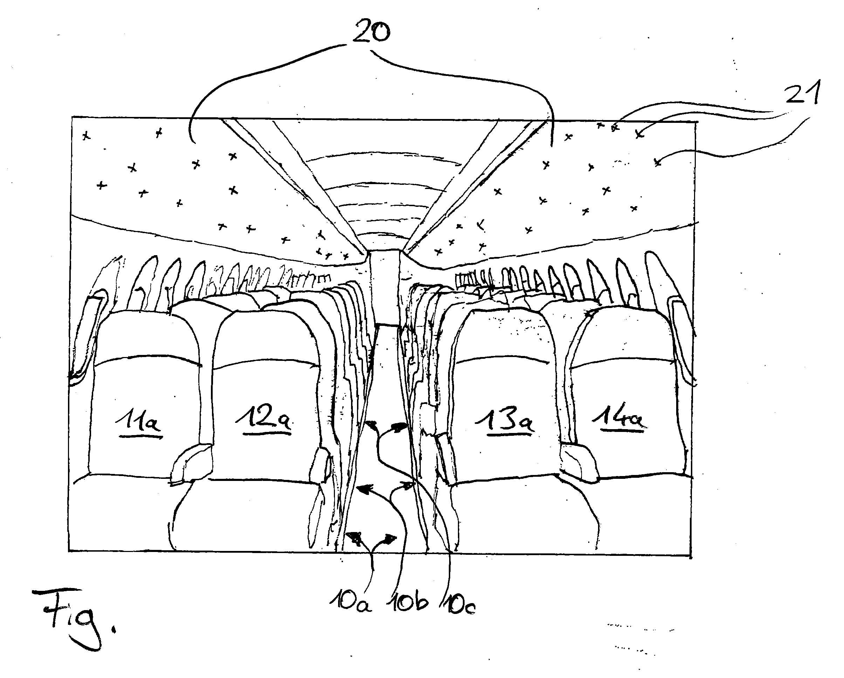

A preferred embodiment of the invention is explained with reference to the figure. The figure shows an inside perspective view of an aircraft cabin. The aircraft cabin has a plurality of rows 10a, b, c each row comprising a plurality of seats 11a, 12a, 13a, 14a.

As can be seen, the aircraft cabin comprises a ceiling 20 which is arranged above the passenger seats and which can be looked at by passengers sitting on said seats. The ceiling is build up by a curved display. It is to be understood that the ceiling could comprise a plurality of curved displays which are LED displays or the ceiling could comprise a plurality of curved screens associated with projectors which are arranged in a distance to said screens.

The ceiling is displaying a real time star pattern 21. This real time star pattern is calculated from GPS geographical position data of the aircraft and data stored in a star data base and representing the position of stars in space, the magnitude and the light intensity of said stars. Using such geographical position data of the aircraft and the geographical data of each star it is possible to calculate a virtual real time star pattern which is present above the aircraft in its present actual position. By displaying said real time star pattern on said ceiling the passenger is given the impression that he can look outside the aircraft and observe the real time star pattern and observe the stars as the star patterns change with the change of the geographical position of the aircraft when it is moving on its travel path.

## Claims

1. Display device for an aircraft cabin, comprising:
a display adapted to display a plurality of stars.

2. Display device of claim 1,
wherein the display forms a portion of a ceiling of the aircraft cabin, preferably as part of a passenger service unit.

3. Display device according to claim 1 or 2,
wherein the display is connected to a star database, the star database having stored data representing three-dimensional positions of the stars, and
wherein the display is adapted to display the plurality of stars depending on the data received from the star database.

4. Display device according to any of the preceding claims,
wherein the display is connected to a GPS system, the GPS system being adapted to provide the position of the aircraft, and
wherein the display is adapted to display the plurality of stars depending on GPS data received from the GPS system.

5. Display device according to claim 4,
wherein the display device is adapted to display a plurality of stars corresponding to the constellation of stars in the environment of the aircraft.

6. Display device according to any of the preceding claims,
wherein the display comprises or consists of a projection system and/or a laser system adapted to project light reflections representing the plurality of stars, onto the ceiling of the aircraft cabin.

7. Display device according to any of the preceding claims,
wherein the display device is adapted to combine the display of the plurality of stars with lighting effects, preferably mood lighting or scenery simulations.

8. Aircraft cabin wall compartment comprising a plurality of wall sections and a plurality of light emitting means for individually illuminating each wall section. further comprising a control unit for controlling the light emitting means.

9. Aircraft cabin wall compartment according to claim 8 wherein said light emitting means are coupled to a star database comprising data related to the position of stars and coupled to said control unit wherein said control unit is adapted to provide control data to said light emitting means, said control data being calculated by said control unit from said data related to the position of stars to illuminate said wall section with an image comprising a plurality of stars.

10. Aircraft cabin wall compartment according to claim 9, wherein said control unit is coupled to a global positioning system (GPS) providing a realtime geographical position information, and wherein said control unit is adapted to calculate a real-time star pattern from said realtime geographical position information and said data related to the position of stars.

11. Aircraft cabin wall compartment according to claim 10, wherein said real-time star pattern on said wall section is a virtual star pattern corresponding to the star pattern as virtually seen by a passenger sitting on a seat of an aircraft and looking towards the wall section in the realtime geographical position.

12. Aircraft cabin wall compartment according to claim 8 wherein each wall section is associated to a row of seats or a single seat.

13. Aircraft cabin wall compartment according to claim 8 or 9 wherein each wall section has a length corresponding to at least the length of a passenger seat or the distance between two adjacent rows of an aircraft.

14. Aircraft cabin wall compartment according to any of claims 8-10 wherein said control unit is coupled to a cabin attendant call switch and adapted to activate a light emitting means associated with a passenger seat which is associated with a respective cabin attendant call switch of said passenger seat.

15. Aircraft cabin wall compartment according to any of claims 8-11 wherein said wall section is a sidewall section or a ceiling section.

16. Aircraft cabin wall compartment according to any of claims 8-12 wherein said light emitting means is adapted to emit light of at least two different colors and said control unit is adapted to switch between said colors depending on a condition of a cabin attended call switch.

17. A method for entertaining passengers in an aircraft, comprising the steps:
- determining the geographical position of the aircraft by an electronic geographical positioning system,
- calculating a star pattern corresponding to said geographical position out of data related to the position of a plurality of stars in space stored in an electronic star data base
- displaying said calculated star pattern on a display.

18. The method of claim 17,
wherein said display comprises a screen and a projecting device and said star pattern is displayed by forward or reverse projection onto said screen.

19. The method of claim 17,
wherein said display is self-illuminating.

20. The method of any claim 17 or 18 or 19,
wherein said display is a ceiling or a side wall compartment.
